# EUROPEAN PATENT APPLICATION

(11) **EP 4 770 100 A1**
(43) Date of publication of application: **01.07.2026**
(21) Application number: 24855868.6
(22) Date of filing: 22.08.2024
(51) Int. Cl.: H04N 21/25

(54) **INFORMATION DISPLAY METHOD AND APPARATUS, COMPUTER DEVICE, AND STORAGE MEDIUM**

(30) Priority: 24.08.2023 CN 202311078345
(71) Applicant: BEIJING YOUZHUJU NETWORK TECHNOLOGY CO. LTD., Beijing 101299 (CN)
(72) Inventor: ZHANG, Hongyang, Beijing 100028 (CN)
(74) Representative: Marks & Clerk LLP
(86) International application number: PCT/CN2024/113868
(87) International publication number: WO 2025/040146

(57) **Abstract**

The present disclosure provides an information display method and apparatus, a computer device, and a storage medium. The method comprises: in response to a recommendation operation instruction for a target account, determining a video to be processed corresponding to the target account, wherein the video to be processed is a published video of the target account, the video content of the published video is a preset content type, and no recommendation information is configured in the published video, determining recommendation information corresponding to the target account, and configuring the recommendation information corresponding to the target account for the video to be processed so as to display, when the video to be processed is played, the recommendation information corresponding to the target account.

## Description

This application claims the priority to and benefits of the Chinese Patent Application, No. 202311078345.4, which was filed on August 24, 2023. The aforementioned patent application is hereby incorporated by reference in its entirety.

### TECHNICAL FIELD

The present disclosure relates to the field of computer technology, and in particular, to a computer method, an apparatus, a computer device and storage medium.

### BACKGROUND

Multimedia platforms generally refer to online platforms capable of processing and displaying multiple types of media content (e.g., text, pictures, audio, video, etc.).

When Video Publishers publish videos, the video content can be varied. Sometimes, some videos introducing or recommending other objects are published. After watching the video, viewers may be interested in the related objects introduced in the video, but the information about the related objects in the video is limited, which makes it difficult to meet the viewers' needs to obtain more relevant information, and it is also difficult for the video publishers to add more relevant information to the published video.

### SUMMARY

Embodiments of the present disclosure provide at least an information display method, an apparatus, a computer device and storage medium.

**In** a first aspect, an embodiment of the present disclosure provides an information display method, which comprising:
determining, in response to a recommendation operation instruction for a target account, a video to be processed corresponding to the target account; wherein the video to be processed is a published video of the target account, and a video content of the published video has a preset content type, and no recommendation information is configured in the published video;
determining recommendation information corresponding to the target account;
configuring the recommendation information corresponding to the target account for the video to be processed, so as to display the recommendation information corresponding to the target account when the video to be processed is played.

**In** an optional implementation, the determining that the video content of the published video has a preset content type comprises:
determining that the video content of the published video is the preset content type in response to the video content of the published video being a recommended content for a target type object and/or in response to the published video being set with a tag corresponding to the preset content type.

**In** an optional implementation, the determining recommendation information corresponding to the target account comprises:
in response to the target account being associated with a display page of at least one target type object, using a page identifier of the display page as the recommendation information;
the configuring the recommendation information corresponding to the target account for the video to be processed, comprising:
adding the page identifier in the video to be processed; wherein the page identifier is used to cause the display page to be displayed when triggered.

**In** an optional implementation, the display page comprises object information of a plurality of target type objects; when at least one object of the plurality of target type objects exists in the video to be processed, a display attribute of object information of the at least one object in the display page satisfying a preset condition.

**In** an optional implementation, the display attribute comprises a display position; the show attribute satisfying a preset condition comprises: the object information of the at least one object in the to-be-processed video is located in top n bits in show bits of the show page; the n is a positive integer.

**In** an optional implementation, the display attributes include a display mode; the display attribute satisfying the preset condition comprises: object information of at least one object in the to-be-processed video is adopted to be displayed in a highlight manner in the display page.

In an optional implementation, before determining the to-be-processed video corresponding to the target account, the method includes:
saving account information of the target account in an account management list in response to a management operation instruction for the target account;
The determining, in response to a recommendation operation instruction for a target account, a to-be-processed video corresponding to the target account, comprises:
generating a recommendation operation instruction for the target account if it is detected that the target account belongs to an account in the account management list;
in response to a recommendation operation instruction for a target account, determining a to-be-processed video corresponding to the target account.

In a second aspect, an embodiment of the present disclosure further provides an information display apparatus, comprising:
a first determination module, configured to, in response to a recommendation operation instruction for a target account, determine a to-be-processed video corresponding to the target account; Wherein the to-be-processed video is a posted video of the target account, and video content of the posted video is a preset content type, and no recommendation information is configured in the posted video;
a second determination module, configured to determine recommendation information that the target account corresponds;
a configuration module, configured to configure the to-be-processed video with the recommendation information corresponding to the target account, so as to show the recommendation information corresponding to the target account when the to-be-processed video is played.

In an optional implementation, the first determination module, when determining that the video content of the published video has a preset content type, is configured to: determine that the video content of the published video is the preset content type if the video content of the published video is the recommended content for the target type object and/or if the published video is set with the tag corresponding to the preset content type.

**In** an optional implementation, the second determination module is specifically configured to:
in the case that the target account is associated with a show page of at least one target type object, identifying a page of the show page as the recommendation information;
The configuration module is specifically configured to:
add the page identification in the to-be-processed video; The page identification is used to present the display page when triggered.

**In** an alternative implementation, the display page contains object information for a plurality of objects of the target type; Where at least one object of the plurality of target type objects exists in the to-be-processed video, a display attribute of object information of the at least one object in the display page satisfies a preset condition.

**In** an optional implementation, the display attribute comprises a display position; the show attribute satisfying a preset condition comprises: the object information of the at least one object in the to-be-processed video is located in top n bits in show bits of the show page; the n is a positive integer.

**In** an optional implementation, the display attributes include a display mode; the display attribute satisfying the preset condition comprises: object information of at least one object in the to-be-processed video is adopted to be displayed in a highlight manner in the display page.

**In** an optional implementation, the apparatus further comprises a management module configured to:
save account information of the target account in an account management list in response to a management operation instruction for the target account;

The first determination module is specifically configured to:
generate a recommendation operation instruction for the target account if it is detected that the target account belongs to an account in the account management list;
n response to a recommendation operation instruction for a target account, determining the video to be processed corresponding to the target account.

**In** a third aspect, an optional implementation of the present disclosure also provides a computer device, which comprises a processor, and a memory storing machine-readable instructions executable by the processor, the processor configured to execute machine-readable instructions stored in the memory, the machine-readable instructions when executed by the processor perform the steps of the first aspect above, or any possible implementation of the first aspect.

In a fourth aspect, an optional implementation of the present disclosure also provides a computer readable storage medium having stored thereon a computer program which, when executed, performs the steps of the first aspect, or any of the possible implementation of the first aspect, described above.

For the description of the effects of the above information displaying apparatus, the computer device, and the computer-readable storage medium, please refer to the description of the above-mentioned information display method, which will not be repeated here.

It should be understood that the above general description and the detailed description below are only exemplary and explanatory, and do not limit the technical solution of the present disclosure.

In order to make the above-mentioned objectives, features and advantages of the present disclosure more obvious and easier to understand, preferred embodiments are specifically cited below and described in detail with reference to the accompanying drawings.

### BRIEF DESCRIPTION OF DRAWINGS

In order to more clearly illustrate the technical solutions of the embodiments of the present disclosure, the accompanying drawings required for use in the embodiments, which are incorporated in and constitute a part of the specification, illustrate embodiments consistent with the present disclosure and, together with the description, serve to explain the technical solutions of the present disclosure, will be briefly described below. It is to be understood that the following drawings illustrate only certain embodiments of the present disclosure and are therefore not to be considered limiting in scope, and that other related drawings may be derived therefrom by one of ordinary skill in the art without inventive step.
Fig. 1 shows a flowchart of an information display method provided by some embodiments of the present disclosure;
Fig. 2 shows one of schematic diagrams of a user interface provided by some embodiments of the present disclosure;
Fig. 3 shows a second schematic diagram of a user interface provided by some embodiments of the present disclosure;
Fig. 4 shows a third schematic diagram of a user interface provided by some embodiments of the present disclosure;
Fig. 5 shows a schematic diagram of an information display apparatus provided by some embodiments of the present disclosure;
Fig. 6 shows a schematic diagram of a computer device provided by some embodiments of the present disclosure.

### DETAILED DESCRIPTION

To make the objects, technical solutions and advantages of the embodiments of the present disclosure clearer, the technical solutions in the embodiments of the present disclosure will be clearly and completely described below in conjunction with the accompanying drawings in the embodiments of the present disclosure, it is obvious that the described embodiments are only a part of the embodiments of the present disclosure, rather than all of the embodiments. The components of the embodiments of the present disclosure as generally described and illustrated herein could be arranged and designed in a wide variety of different configurations. Thus, the following detailed description of the embodiments of the disclosure is not intended to limit the scope of the disclosure, as claimed, but is merely representative of selected embodiments of the disclosure. Based on the embodiments of the present disclosure, all other embodiments obtained by those skilled in the art without making creative labor belong to the scope of protection of the present disclosure.

It has been found that after a video is published, it is difficult for a video publisher to add more information to the published video, and it is difficult for a video viewer to obtain more information that introduces relevant objects in the video.

Based on the above studies, the present disclosure provides an information display method, an apparatus, a computer device and storage medium, and the method is capable of determining, according to the content type of the video content of the published video, and whether the published video is configured with the recommendation information, a video to be processed that meets the needs of the target account, after which the recommendation information to be recommended by the target account can be determined, and the recommendation information corresponding to the target account can be configured for the video to be processed, so that when the video to be processed is played, the recommendation information can be displayed, enabling the user to acquire more information, and the target account does not need to actively modify the video to be processed.

The deficiencies of the above solutions are all the results of the inventor's practice and careful study, and therefore, the discovery process of the above problems and the solutions proposed by the present disclosure to the above problems hereinafter should be contributions made by the inventor to the present disclosure during the course of the present disclosure.

It should be noted that similar reference numerals and letters denote similar items in the following drawings, and therefore, once an item is defined in one drawing, it does not require further definition and explanation in the subsequent drawings.

It can be understood that before using the technical solution disclosed by the embodiments of the present disclosure, the user should be informed of the type, the use range, the use scenario, and the like of the personal information to which the present disclosure relates and obtain the authorization of the user in an appropriate manner in accordance with the relevant laws and regulations.

For example, in response to receiving the user's active request, prompt information is sent to the user to explicitly prompt the user that the operation that he requests to perform will require acquisition and use of personal information to the user. Thus, it is possible for the user to autonomously select whether to provide personal information to software or hardware such as an electronic device, an application program, a server, or a storage medium, which performs the operations of the disclosed technical solution, according to the prompt information.

As an alternative but non-limiting implementation, the manner in which the prompt information is sent to the user in response to receiving the user's active request may be, for example, in the form of a pop-up window in which the prompt information may be presented in the form of text. **In** addition, the pop-up window may also carry a selection control for the user to select "agree" or "disagree" to provide personal information to the electronic device.

It is to be understood that the above-described notification and obtaining user authorization process is merely illustrative and does not constitute a limitation to implementations of the present disclosure, and that other ways of satisfying the relevant laws and regulations may be applied to implementations of the present disclosure.

**In** order to facilitate the understanding of the present embodiment, first, an information display method disclosed by the embodiments of the present disclosure will be described in detail, and the execution body of the information display method provided by the embodiments of the present disclosure is generally a computer device having a certain computing power, which includes, for example, a terminal device or a server or other processing device. **In** some possible implementations, the information display method may be implemented by way of a processor invoking computer readable instructions stored in a memory.

The method provided by the embodiment of the present disclosure is explained below by taking the execution subject as a server as an example.

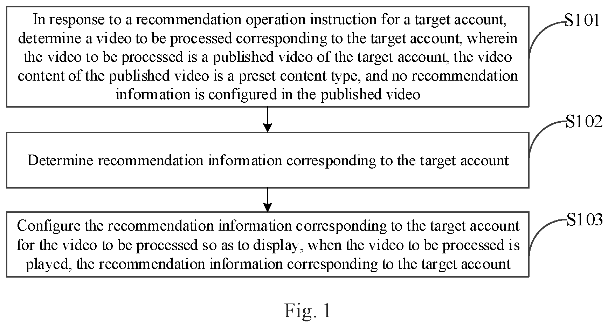

Referring to Fig. 1, which is a flowchart of an information display method provided by embodiment of the present disclosure, the method comprises steps S101 to S103:
S101, determining, in response to a recommendation operation instruction for a target account, a video to be processed corresponding to the target account; wherein the video to be processed is a published video of the target account, and a video content of the published video has a preset content type, and no recommendation information is configured in the published video.

The above-mentioned target account may be an account corresponding to a video publishing user in the multimedia platform. A video publishing user may publish a video on a multimedia platform through a target account. The published video may be associated with the target account, and the associated video may be the video of the target account.

The video published by the target account before responding to the recommendation operation instruction is the published video described above. The above-mentioned video to be processed may be a video obtained by filtering published videos of the target account and to which recommendation information needs to be added. The above-mentioned video content may be information included in the published video, such as audio information, text information, image information. The above-mentioned preset content type may refer to that the video content contains an introduction to an object of a specific type.

In some videos, the video publishing user can make some recommendations to the video viewing user through the video. The recommended content may include concepts such as items, places, songs, movies, methods, and the like. Sometimes, the user wants to recommend some relevant information after the video has been published, in which case the recommendation information may be added to the video. When the video publishing user wishes to add recommendation information to the video, the server may generate a recommendation operation instruction for the target account. After detecting the recommendation operation instruction, the server may determine a video to be processed corresponding to the target account.

The server may filter the published videos of the target account to filter out videos to which the user wishes to add recommendation information. The above-mentioned recommendation information can be for the user who plays the video to be processed to view or interact with. The recommendation information may be associated with the content of the video, may directly deliver relevant information to the user regarding the content of the video, or may have functionality to guide the user to perform some action related to the content of the video (e.g., guide the user to trigger the recommendation information and present the display page of the target account after the trigger). The recommendation information may be a text, an image, a voice, a jump connection, a user interface control, or the like.

Upon determining the video to be processed, the server may filter out, from the published videos of the target account, a video for which the video content is the preset content type and the recommendation information is not configured, as the video to be processed.

In the filtering for the preset content type, the content type of the video content of each published video may be determined first, and then it may be determined whether the determined content type is consistent with the preset type. Alternatively, it may also be determined whether the video content will match the characteristics of the preset content type.

For example, it may be determined whether the video content of the published video contains recommended content for the target type object, and if so, it may be determined that the published video content is related to the target type object, and it may be determined that the video content of the published video has a preset content type.

The target type object described above may be an object related to recommendation information to be added by the user in the video. The object may be a physical object or a virtual object; the object may be a specific object or may be a concept.

Illustratively, if the recommended content is information of an item, the target type object may be the item, or an item of the same type as this item.

Specifically, if the recommendation content is related information for seat A, the target type object may be seat A, or seat B of the same seat type, or some concept having a seat function (e.g., ergonomic seat, recliner, etc.).

Alternatively, if the recommended content is information that introduces a plurality of travel locations, the target type object may be a particular travel location, or the abstraction of "travel" itself.

In determining whether the video content of the published video includes recommended content for the target type object, the video content may be identified. The video content may include text, speech, and images.

For example, if the content of the recommended seat A is recognized from the speech in the published video, and the recommendation information is information for the seat A, it may be determined that the video content of the published video is the preset content type.

Trained models, such as neural network models, machine learning models, may be employed when video content is identified. The published video may be input into a model, which may output a recognition result of the video content.

In some possible implementation, the published video may be provided with a tag. The tags may be set by the video publishing user, or may be set according to information such as video content, title, and the like. If the published video is provided with a tag corresponding to the preset content type, it may also be determined that the video content of the published video is the preset content type.

The above-mentioned manner of determining whether the video content of the published video is the preset content type may be used simultaneously or separately, i.e., determining that the video content of the published video is the preset content type in response to the video content of the published video being a recommended content for a target type object and/or in response to the published video being set with a tag corresponding to the preset content type.

In one possible implementation, the above-mentioned recommendation information may be identification information of the display page. The identification information may be triggered, after which the display page may be displayed.

The display page may be a display page associated with the target account, and the display page may include information about at least one object of the target type. The above target type object may be consistent with the target type object used when determining whether the video content is the preset content type. For example, if the video content of the published video contains recommendation information about seats, the display page may contain information about various seats.

In this way, the recommendation information has a stronger association with the video content of the published video, and by setting the recommendation information in the published video, the video viewing user can be provided with more relevant information for the target type object.

Among the published videos, there may be some videos for which recommendation information has been configured. Therefore, in the present embodiment, it is possible to filter out the video to be processed not configured with the recommendation information from the published video, and configure the recommendation information on the published video not configured with the recommendation information.

In filtering the published video for which the recommendation information is not configured, it may be first judged whether the published video is configured with the recommendation information for any type of object. If not configured, it may be filtered out; if so, it may be determined whether the configured recommendation information is for the target type object, and if not, it may be filtered out as a video to be processed.

The above-mentioned recommendation operation instruction may be generated by the server. Before determining the video to be processed corresponding to the target account, the user may manage a function of automatically configuring the recommendation information. The user can select whether to use the function of automatically configuring the recommendation information. Upon the user determining to use it, a management operation instruction may be triggered. The server, upon acquiring the management operation instruction for the target account, may save the account information of the target account in the account management list. When the server detects that the target account belongs to an account in the account management list, then a recommendation operation instruction can be generated for the target account, and in response to the generated recommendation operation instruction, the video to be processed corresponding to the target account is determined.

The server may periodically check the account management list. At each time of detection, if it is detected that there is an account in the account management list, the recommendation operation instruction corresponding to the account may be generated, and the determination of the video to be processed is triggered for automatic deployment of the recommendation information.

In a particular application scenario, the multimedia platform may provide users with a hosting service, which can automatically associate the published videos of the target account with the display page and provide an entrance for the display page in the published video. In this way, video viewers who watch the published video can also quickly access the display page, increasing the number of visits to the display page.

Exemplarily, the multimedia platform may provide a hosting service page, and display related information of the hosting service, and open a control button of the hosting service, which the user can trigger, thereby triggering a management operation instruction, which the server can acquire, add the target account corresponding to the triggered control button to the account management list, and provide the hosting service to the user of the target account, i.e., the above-mentioned steps of determining the video to be processed of the target account, and determining the recommendation information corresponding to the target account, and configuring the recommendation information for the video to be processed.

S102, determining recommendation information corresponding to the target account.

Upon determining the recommendation information corresponding to the target account, the server may acquire the recommendation information input by the video publishing user in advance, and take it as the recommendation information corresponding to the target account, or, the server may automatically generate the recommendation information corresponding to the target account, upon generating the recommendation information, it may be generated according to the video content of the video to be processed.

In one possible implementation, the server may determine whether the target account is associated with a display page. The display page may be associated with at least one target type object. When the display page is associated with at least one target type object, object information of the at least one target type object may be displayed in the display page, and the object information may be introduction information of the target type object.

In the case where it is determined that the target account is associated with a display page of at least one target type object, the page identifier of the display page may be used as the recommendation information. The page identifier of the display page may be a picture or text. The page identifier may be associated with a jump connection of an display page, and when the page identifier is triggered, the jump connection of the display page may be accessed to display the associated display page.

S103, configuring the recommendation information corresponding to the target account for the video to be processed, so as to display the recommendation information corresponding to the target account when the video to be processed is played.

After the recommendation information corresponding to the target account is determined, the recommendation information corresponding to the target account can be configured for the video to be processed. When a video to be processed is configured with the above-mentioned recommendation information is played, the recommendation information may be displayed, thereby enabling the video viewing user to acquire the recommendation information.

The above-mentioned recommendation information may be presented in a playing page of the video to be processed, and one or more of the above-mentioned recommendation information may be deployed in the playing page.

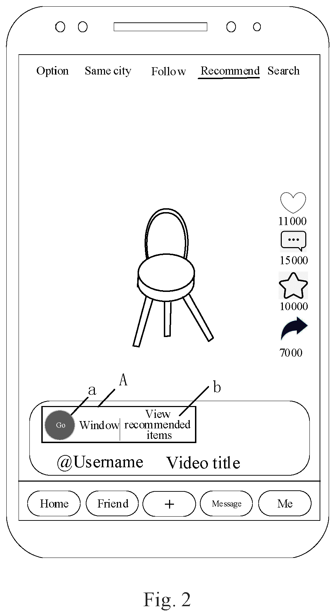

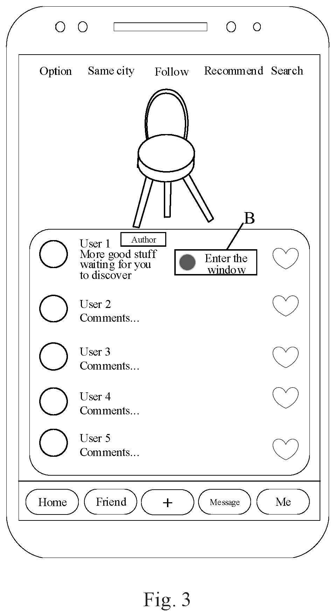

For example, reference is made to Fig. 2 and Fig. 3, which are respectively a first schematic diagram of a user interface provided by an embodiment of the present disclosure and a second schematic diagrams of a user interface provided by some embodiments of the present disclosure. As shown in Fig. 2, a video playing page of a video to be processed may be displayed in the user interface; the recommended content A may be a page identifier of the display page and may be presented in a profile area of the playing page. As shown in Fig. 3, recommended content B can be identifier for another page of the display page and can be presented in the comment area of the playing page.

The above-mentioned page identifier may also carry introductory information for the display page, which can be in the form of text, images, or the like. For example, the recommendation information in Fig. 2 may include a page identifier a of a display page, which may be a "window page," and introduction information b of the display page, which may include "view recommended items."

The display information of the display page may be associated with the video content of the video to be processed when the video viewing user triggers the recommendation information to jump to the display page. Exemplarily, the display page may contain object information of a plurality of target type objects, and when the user enters the display page through other entry means, the display location of the object information may be set according to a preset sorting method; when the user enters the display page through the recommendation information, the server may judge whether there is an object in the display page in the video to be processed corresponding to the triggered recommendation information, that is, judge that at least one object among a plurality of target type objects in the display page exists in the video to be processed. If present, the object information of the at least one object may be specifically presented in the display page, that is, the display attributes of the object information of the at least one object in the display page satisfy preset conditions.

Exemplarily, the display attribute may include a display location, and the display attribute satisfying the preset condition may include that the object information of the at least one object in the video to be processed being located in the first n bits in the display location of the display page, wherein n is a positive integer.

The n in the first n locations mentioned above may be preset, for example, n may be set to 1, so that the object information of the object in the video to be processed will be displayed in the first display location in the display page.

Alternatively, the determination may be based on the number of the at least one object, for example, if the video to be processed contains only one object located in the display page, the object information of the object is located in the first display location in the display page; if the video to be processed contains a plurality of objects, e.g., three, in the display page, the display information for the three objects in the display page is located in the first three display locations.

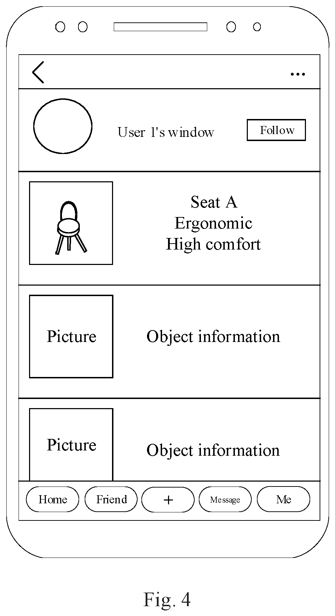

Referring to Fig. 4, which shows a third schematic diagram of a user interface provided by some embodiments of the present disclosure, in which a display page entered through recommendation information may be displayed; there is object information of seat A shown in the display page, and recommended content of seat A is also included in the video content of the video to be processed; the object information for seat A may be in an overhead display position in the display page, with the object information for other objects in the display page being displayed after the object information for seat A.

In one possible implementation, the display attribute may include a display manner, and the display attribute satisfying the preset condition may include that the object information of the at least one object in the video to be processed being displayed in a highlight display manner in the display page.

The above-mentioned highlight display may include effects such as top placement, highlighting, displaying highlighting special effects, and the like.

The information display method provided by the embodiments of the present disclosure can determine a video to be processed that meets the requirements of the target account according to the content type of the video content of the published video and whether the published video is configured with the recommendation information. Afterwards, the recommendation information to be recommended by the target account can be determined, and the recommendation information corresponding to the target account can be configured to the video to be processed, so that when the video to be processed is played, the recommendation information can be displayed, so that the user can acquire more information, and the target account is not required to actively modify the video to be processed.

In one possible implementation, after the user publishes a new video, it is also possible to directly determine whether the newly published video is a video to be processed, and configure the recommendation information for it if it is a video to be processed.

It will be appreciated by those skilled in the art that in the above described method of the specific implementation, the order in which the steps are written does not imply a strict order of execution and constitutes any limitation on the implementation of the process, and that the specific order of execution of the steps should be determined by their functionality and possibly the underlying logic.

Based on the same inventive concept, the information display apparatus corresponding to the information display method is also provided in the embodiment of the present disclosure, since the principle of solving the problem of the apparatus in the embodiment of the present disclosure is similar to the above-described information display method of the embodiment of the present disclosure, the implementation of the apparatus can be referred to the implementation of the method, and the repetitions will not be repeated.

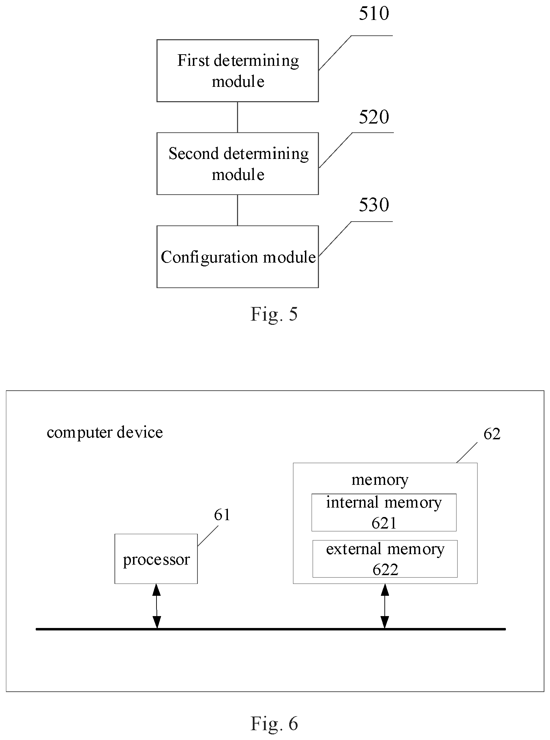

Referring to Fig. 5, there is provided a schematic diagram of an information display apparatus according to some embodiments of the present disclosure, the apparatus comprising:
a first determination module 510, configured to configured to, determine, in response to a recommendation operation instruction for a target account, a video to be processed corresponding to the target account; wherein the video to be processed is a published video of the target account, and a video content of the published video has a preset content type, and no recommendation information is configured in the published video;
a second determination module 520, configured to determine recommendation information corresponding to the target account;
a configuration module 530, configured to configure the recommendation information corresponding to the target account for the video to be processed, so as to display the recommendation information corresponding to the target account when the video to be processed is played.

The information display apparatus provided by the embodiments of the present disclosure can determinie, according to the content type of the video content of the published video, and whether the published video is configured with the recommendation information, a video to be processed that meets the needs of the target account, after which the recommendation information to be recommended by the target account can be determined, and the recommendation information corresponding to the target account can be configured for the video to be processed, so that when the video to be processed is played, the recommendation information can be displayed, enabling the user to acquire more information, and the target account does not need to actively modify the video to be processed.

In an optional implementation, the first determination module 510, when determine that the video content of the published video has a preset content type, is configured to:
determine that the video content of the published video is the preset content type in response to the video content of the published video being a recommended content for a target type object and/or in response to the published video being set with a tag corresponding to the preset content type.

In an optional implementation, the second determination module 520 is specifically configured to:
in response to the target account being associated with a display page of at least one target type object, use a page identifier of the display page as the recommendation information.

The configuration module 530 is specifically configured to:
add the page identifier in the video to be processed; wherein the page identifier is used to cause the display page to be displayed when triggered.

**In** an alternative implementation, the display page the display page comprises object information of a plurality of target type objects; when at least one object of the plurality of target type objects exists in the video to be processed, a display attribute of object information of the at least one object in the display page satisfying a preset condition.

**In** an optional implementation, the display attribute comprises a display location; the display attribute satisfying the preset condition comprises: the object information of the at least one object in the video to be processed being located in first n locations of the display locations in the display page; and n is a positive integer.

**In** an optional implementation, the display attribute comprises a display manner; the display attribute satisfying the preset condition comprises: the object information of the at least one object in the video to be processed being displayed in a highlight manner in the display page.

**In** an optional implementation, the apparatus further comprises a management module configured to:
save account information of the target account in an account management list in response to a management operation instruction for the target account;

The first determination module is specifically configured to:
generate a recommendation operation instruction for the target account in response to detecting that the target account belongs to an account in the account management list;
in response to the recommendation operation instruction for the target account, determining the video to be processed corresponding to the target account.

The description of the process flow of the respective modules in the apparatus, and the interaction flow between the respective modules can refer to the related description in the above method embodiments, which will not be detailed here.

The embodiment of the present disclosure further provides a computer device, as shown in Fig. 6, for the structural schematic diagram of the computer device provided by the embodiment of the present disclosure, which comprises:
a processor 61 and a memory 62; the memory 62 stores machine-readable instructions executable by the processor 61, the processor 61 is used for executing the machine-readable instructions stored in the memory 62, wherein when executed by the processor 61, the processor 61 performs the following steps:
determining, in response to a recommendation operation instruction for a target account, a video to be processed corresponding to the target account; wherein the video to be processed is a published video of the target account, and a video content of the published video has a preset content type, and no recommendation information is configured in the published video;
determining recommendation information corresponding to the target account;
configuring the recommendation information corresponding to the target account for the video to be processed, so as to display the recommendation information corresponding to the target account when the video to be processed is played.

In an optional implementation, the instructions executed by the processor 61 wherein the determining that the video content of the published video has a preset content type comprises:
determining that the video content of the published video is the preset content type in response to the video content of the published video being a recommended content for a target type object and/or in response to the published video being set with a tag corresponding to the preset content type.

In an alternative implementation, the instruction executed by the processor 61, the determining recommendation information corresponding to the target account comprises:
in response to the target account being associated with a display page of at least one target type object, using a page identifier of the display page as the recommendation information;
the configuring the recommendation information corresponding to the target account for the video to be processed, comprising:
adding the page identifier in the video to be processed; wherein the page identifier is used to cause the display page to be displayed when triggered.

In an alternative implementation, the processor 61 executes instructions wherein the display page comprises object information of a plurality of target type objects; when at least one object of the plurality of target type objects exists in the video to be processed, a display attribute of object information of the at least one object in the display page satisfying a preset condition.

In an alternative implementation, the processor 61 executes instructions wherein the display attribute comprises a display location; the display attribute satisfying the preset condition comprises: the object information of the at least one object in the video to be processed being located in first n locations of the display locations in the display page; and n is a positive integer.

In an alternative implementation, in the instructions executed by the processor 61, wherein the display attribute comprises a display manner; the display attribute satisfying the preset condition comprises: the object information of the at least one object in the video to be processed being displayed in a highlight manner in the display page.

In an optional implementation, the instructions executed by the processor 61 wherein before the determining a video to be processed corresponding to the target account, the method comprises:
saving account information of the target account in an account management list in response to a management operation instruction for the target account;
the determining, in response to a recommendation operation instruction for a target account, a video to be processed corresponding to the target account, comprising:
generating a recommendation operation instruction for the target account in response to detecting that the target account belongs to an account in the account management list;
in response to the recommendation operation instruction for the target account, determining the video to be processed corresponding to the target account.

The above-mentioned memory 62 includes internal memory 621 and external memory 622; the memory 621 here is also called internal memory, which is used to temporarily store the calculation data in the processor 61, as well as the data exchanged with the external memory 622 such as the hard disk. The processor 61 exchanges data with the external memory 622 through the internal memory 621.

The specific execution process of the above instructions may refer to the steps of the information display method described in the embodiments of the present disclosure, which are not repeated here.

The embodiment of the present disclosure also provides a computer-readable storage medium, on which a computer program is stored, and when the computer program is executed by a processor, the steps of the information display method described in the above method embodiments are executed. The storage medium can be a volatile or non-volatile computer-readable storage medium.

The embodiment of the present disclosure also provides a computer program product, which carries a program code, and the instructions included in the program code can be used to execute the steps of the information display method described in the above method embodiment. For details, please refer to the above method embodiment, which will not be repeated here.

Therein, the above-mentioned computer program product may be specifically implemented by means of hardware, software, or a combination thereof. **In** one alternative embodiment, the computer program product is embodied as a computer storage medium, and in another alternative embodiment, the computer program product is embodied as a software product, such as a Software Development Kit (SDK) or the like.

It can be clearly understood by those skilled in the art that, for convenience and conciseness of description, the specific working processes of the above-described systems and devices can be referred to the corresponding processes in the foregoing method embodiments, which are not repeated herein. In the several embodiments provided by the present disclosure, it is to be understood that the disclosed systems, devices, and methods may be implemented in other ways. The apparatus embodiments described above are merely illustrative, for example, the division of the units is merely one logical function, and other divisions may be actually implemented, for example, multiple units or components may be combined or integrated into another system, or some features may be omitted or not performed. Further, the coupling or direct coupling or communication connection between each other shown or discussed may be an indirect coupling or communication connection through some communication interface, device or unit, which may be electrical, mechanical or otherwise.

The units described as separate components may or may not be physically separated, and the components displayed as units may or may not be physical units, that is, they may be located in one place or distributed on multiple network units. Some or all of the units may be selected according to actual needs to achieve the purpose of the scheme of this embodiment.

In addition, each functional unit in each embodiment of the present disclosure may be integrated into a processing unit, or each unit may exist physically separately, or two or more units may be integrated into one unit.

The functions, if implemented in the form of a software functional unit and sold or used as a stand-alone product, may be stored in a processor-executable non-volatile computer-readable storage medium. Based on such an understanding, the technical solution of the present disclosure in essence or the part contributing to the prior art or the part of the technical solution may be embodied in the form of a software product, which is stored in a storage medium, and includes a plurality of instructions for causing a computer device (which may be a personal computer, a server, or a network device, etc.) to perform all or a part of the steps of the methods of the various embodiments of the present disclosure. The aforementioned storage media include various media that can store program codes, such as a compact disk, a removable hard disk, a Read-Only Memory (ROM), a Random-Access Memory (RAM), a magnetic disk, or an optical disk.

Finally, it should be noted that the above-described embodiments are only specific implementation (s) of the present disclosure to illustrate the technical solutions of the present disclosure rather than to limit the scope of the present disclosure, and the scope of protection of the present disclosure is not limited thereto. Although the present disclosure has been described in detail with reference to the foregoing embodiments, those skilled in the art will appreciate that any person skilled in the art may modify the technical solutions described in the foregoing embodiments or may easily conceive of variations, or may substitute equivalents to some of the technical features thereof, within the technical scope of the present disclosure; While these modifications, variations or replacements, which do not make the essence of the corresponding technical solutions depart from the spirit and scope of the technical solutions of the embodiments of the present disclosure, shall be covered within the protection scope of the present disclosure. Therefore, the protection scope of the present disclosure should be subject to the protection scope of the claims.

## Claims

1. An information display method, comprising:
determining, in response to a recommendation operation instruction for a target account, a video to be processed corresponding to the target account; wherein the video to be processed is a published video of the target account, and a video content of the published video has a preset content type, and no recommendation information is configured in the published video;
determining recommendation information corresponding to the target account; and
configuring the recommendation information corresponding to the target account for the video to be processed, so as to display the recommendation information corresponding to the target account when the video to be processed is played.

2. The information display method according to claim 1, wherein the determining that the video content of the published video has a preset content type comprises:
determining that the video content of the published video has the preset content type in response to the video content of the published video being a recommendation content for a target type object and/or in response to the published video being set with a tag corresponding to the preset content type.

3. The information display method according to claim 1 or 2, wherein the determining recommendation information corresponding to the target account comprises:
in response to the target account being associated with a display page of at least one target type object, using a page identifier of the display page as the recommendation information;
the configuring the recommendation information corresponding to the target account for the video to be processed, comprises:
adding the page identifier in the video to be processed; wherein the page identifier is used to cause the display page to be displayed when triggered.

4. The information display method according to claim 3, wherein the display page comprises object information of a plurality of target type objects; when at least one object of the plurality of target type objects exists in the video to be processed, a display attribute of object information of the at least one object in the display page satisfies a preset condition.

5. The information display method according to claim 4, wherein the display attribute comprises a display location; the display attribute satisfying the preset condition comprises: the object information of the at least one object in the video to be processed being located in first n locations of display locations in the display page; and n is a positive integer.

6. The information display method according to claim 4, wherein the display attribute comprises a display manner; the display attribute satisfying the preset condition comprises: the object information of the at least one object in the video to be processed being displayed in a highlight manner in the display page.

7. The information display method according to any one of claims 1 to 6, wherein before the determining a video to be processed corresponding to the target account, the information display method comprises:
saving account information of the target account in an account management list in response to a management operation instruction for the target account;
the determining, in response to a recommendation operation instruction for a target account, a video to be processed corresponding to the target account, comprises:
generating a recommendation operation instruction for the target account in response to detecting that the target account belongs to an account in the account management list;
in response to the recommendation operation instruction for the target account, determining the video to be processed corresponding to the target account.

8. An information display apparatus, comprising:
a first determining module, configured to, determine, in response to a recommendation operation instruction for a target account, a video to be processed corresponding to the target account; wherein the video to be processed is a published video of the target account, and a video content of the published video has a preset content type, and no recommendation information is configured in the published video;
a second determining module, configured to, determine recommendation information corresponding to the target account; and
a configuration module, configured to, configure the recommendation information corresponding to the target account for the video to be processed, so as to display the recommendation information corresponding to the target account when the video to be processed is played.

9. A computer device, comprising: a processor, and a memory, wherein the memory stores machine-readable instructions executable by the processor, the processor is used to execute the machine-readable instructions stored in the memory, when the machine-readable instructions are executed by the processor, the processor executes steps of the information display method according to any one of claims 1 to 7.

10. A computer-readable storage medium, wherein computer programs are stored on the computer-readable storage medium, when the computer programs are executed by a computer device, the computer device executes steps of the information display method according to any one of claims 1 to 7.
